**Europäisches Patentamt**

**European Patent Office**

**Office européen des brevets**

(11) Veröffentlichungsnummer: **0 026 806**
A1

(12) # EUROPÄISCHE PATENTANMELDUNG

(21) Anmeldenummer: 80102207.0

(22) Anmeldetag: 24.04.80

(51) Int. Cl.³: **C 08 L 27/12,** C 08 L 27/18, C 08 J 3/20

(30) Priorität: 01.10.79 DE 2939754

(43) Veröffentlichungstag der Anmeldung: 15.04.81 **Patentblatt 81/15**

(84) Benannte Vertragsstaaten: **AT BE CH FR GB IT LI NL SE**

(71) Anmelder: **PAMPUS Vermögensverwaltungs-KG, Am Nordkanal 37-43, D-4156 Willich 3 (DE)**

(72) Erfinder: **Bloess, Peter, Dr. rer. nat., An der Schiessrute 37, D-4156 Willich 3 (DE)**

(74) Vertreter: **Teichmann, Eberhard, Dipl.-Ing. et al, Am Nordkanal 37-43, D-4156 Willich 3 (DE)**

(54) **Thermoplastischer Fluorkunststoff mit Polytetrafluoräthylen-Beimischung und Verfahren zu dessen Herstellung.**

(57) Einem thermoplastisch verarbeitbarem Fluorkunststoff wird feinkörniges Polytetrafluoräthylen (PTFE) in reiner oder in mit Zusätzen gefüllter Form (Compounds) beigemischt und beide Komponenten werden so homogen verschmolzen, daß ein thermoplastisch verarbeitbarer Mischwerkstoff mit neuen Eigenschaften entsteht. Das PTFE besteht vorteilhaft aus bereits ausgesintertem und anschließend durch Zerkleinerung wieder in ein feinkörniges Pulver zurückgeführtem PTFE, sogenanntem Regenerat. PTFE-Regenerat von Compounds kann eine Füllung von bekannten, die Trockenschmierung verbessernden Zusätzen, enthalten. Das Regenerat kann ferner die mechanische Festigkeit erhöhende Zusätze wie Glasteilchen, Mineralstoffe oder Metallpartikel enthalten.

In dem Mischwerkstoff, der aus den an sich nur sehr schlecht benetzbaren und nicht echt thermoplastische schmelzbaren PTFE-Partikeln und einem thermoplastisch verarbeitbarem Fluorkunststoff insbesondere Perfluoräthylen-Propylen (FEP) und Perfluoralkyl-Perfluorvinyläther bzw. Perfluoralkoxy (PFA und TFA) besteht, tritt eine echte, nahezu homogene Bindung von PTFE mit der umgebenden schmelzbaren Grundmasse auf. Es ist vorteilhaft, das Mischgut kontinuierlich aufzuschmelzen und während der Aufschmelzung eine Plastifizierung durchzuführen.

**PAMPUS**
Am Nordkanal · Postfach 8ΰ
4156 Willich 3 - Schiefbahn

Thermoplastischer Fluorkunststoff mit Polytetrafluoräthylen-Beimischung und Verfahren zu dessen Herstellung

Die Aufgabe der Erfindung besteht darin, einen thermoplastischen verarbeitbaren Fluorkunststoff-Mischwerkstoff mit neuen Eigenschaften herzustellen, der homogen verteiltes Polytetrafluoräthylen (PTFE) enthält. Das Ziel dieser Beimischung ist es, die mechanischen Festigkeitswerte des thermoplastischen Fluorkunststoffes zu verbessern, die Dauerdruckstandfestigkeit und Abriebfestigkeit zu erhöhen und gleichzeitig den Reibungswert herabzusetzen, um die Gleiteigenschaften zu verbessern. Darüberhinaus ist eine solche Beimischung dann interessant, - und das ist beim jetzigen Stand der Technik bzw. der Herstellungspreise der Fall -, wenn der gefundene Mischwerkstoff kostengünstiger als der thermoplastisch verarbeitbare Fluorkunststoff ist und somit wirtschaftlicher eingesetzt werden kann.

Die Lösung dieser Aufgabenstellung wurde durch Zusatz von feinkörnigem, granuliertem oder gesintertem PTFE gefunden. PTFE-Pulver werden zur Verbesserung der Fließeigenschaften beim Füllen von Preßeinrichtungen allgemein granuliert, wobei die Granulierung häufig mit einer Vorsinterung gekoppelt ist. Bereits ausgesintertes PTFE, so Produktionsabfälle, werden durch Mahlung in ein feinkörniges Pulver zurückgeführt, wobei sowohl ungefüllte (weiße) oder gefüllte PTFE-Arten (als Compounds bezeichnet) gemahlen werden. Diese aus gesintertem PTFE bestehenden Pulver werden in der Kunststofftechnik als Regenerat bezeichnet, sie liegen im Preis niedriger als das ursprüngliche (juvenile) PTFE-Pulver, da aus Regenerat erzeugte Produkte in vieler Hinsicht ungünstigere PTFE-Qualitäten ergeben. So liegen Reißfestigkeit, Reißdehnung, Porenfreiheit, Gleichmäßigkeit der Struktur, Wechselbiegefestigkeit und andere Eigenschaften wesentlich ungünstiger als die der Produkte, die aus juvenilem PTFE hergestellt werden. Andererseits kann die Druckstandfestigkeit von PTFE-Produkten durch den Zusatz von Regenerat-Pulver bei der Herstellung erhöht werden. Da PTFE und auch die meisten Fluorthermoplaste unter Druck und Temperatur zum Fließen neigen, d.h. keine sehr hohe Dauer-Druckstandfestigkeit besitzen, kann ein Regeneratzusatz in Fällen, wo es auf die Dauer-Druckstandfestigkeit ankommt, z.B. bei Dichtungen oder Lagerschalen, von Vorteil sein.

Der Zusatz von gemahlenem, zerspantem oder zerfasertem, vorher gesintertem PTFE zu thermoplastischen Kunststoffen ist bereits seit langem bekannt. Bei Lagerelementen, die aus Thermoplasten mit zugemischtem PTFE hergestellt werden, dient der PTFE-Zusatz dazu, den Reibungsbeiwert herabzusetzen bzw. der entstehende PTFE-Abrieb dient als Trockenschmiermittel bei der Gleitreibung. So ist es nach der US-PS 29 75 128 und der DE-PS 10 78 319 bekannt, PTFE-Teilchen in eine thermoplastische Grundmasse von Polyamid, Polystyrol, Methylmethacrylat, Cellulosebutyrat oder Cellulosenitrat einzubetten. Bei beiden Patenten wird der thermoplastische Kunststoff bei einer Temperatur unterhalb des Schmelzpunktes von PTFE (327 $^{o}$C) flüssig, und bettet die verhältnismäßig groben PTFE-Partikel ein. In der genannten US-PS ist angegeben, daß es extrem schwierig ist, eine homogene Mischung aus geschmolzenem Polyamid (Nylon) und den PTFE-Teilen zu erzeugen, deswegen wird dort vorgeschlagen, das feinkörnige Polyamid-Pulver mit den gröberen PTFE-Partikeln ungeschmolzen zu mischen, die Mischung zu pressen und die so erzeugten Teile bei einer Temperatur über dem Schmelzpunkt des Polyamid, aber unter dem Schmelzpunkt des PTFE, zu sintern.

Bei der DE-PS 10 78 319 wird angegeben, daß die PTFE-Partikel mit einem vorzugsweisen Durchmesser zwischen 0,4 und 0,8 mm in dem thermoplastischen Kunststoff bei einer Temperatur unterhalb des Schmelzpunktes des PTFE suspendiert und aus der so hergestellten Mischung Spritzgußteile hergestellt werden. In jedem Fall sind die nicht angeschmolzenen PTFE-Partikel, die sich wegen ihrer antiadhäsiven Oberfläche mit den genannten Kunststoffen nicht ver-

- 4 -

- 4 -

binden, nach dem Erstarren lediglich in den Thermoplasten eingebettet.

In der GB-PS 96 70 87 wird als Erfindung beansprucht, daß Lagerelemente aus Polyamid, Polyäthylen oder Polyurethan mit einer Beimischung von Teilchen aus zerkleinertem PTFE gepreßt werden und
diese Lagerelemente mit einem niedrigem Reibungskoeffizienten als
innere Gleitbeläge von entsprechenden Lagern dienen. Auch in diesem Fall gilt für die Verbindung zwischen PTFE und der thermoplastischen Grundmasse das vorhergesagte, da der Schmelzpunkt der genannten Kunststoffe wesentlich niedriger als der von PTFE liegt.

Schließlich wird in der DE-PS 12 95 808 und der DE-AS 19 36 822
die Herstellung von Kunststoff-Formstücken im Gießverfahren beschrieben, die in einer thermoplastischen Kunststoff-Grundmasse
PTFE-Späne zur Verminderung der Gleitreibung von daraus hergestellten Lagerelementen enthalten. Auch aus diesen beiden Vorveröffentlichungen geht hervor, daß die thermoplastische Grundmasse
im Schmelzpunkt wesentlich niedriger als PTFE liegt, daß die PTFE-
Partikel in der Grundmasse nur eingebettet und wegen der fehlenden
benetzenden Verbindung zwischen beiden Massen durch besondere Formgebung der Partikel oder durch Verfahren bei der Gießharzherstellung gebunden werden müssen.

Bei der vorliegenden Erfindung tritt ein ganz anderer Effekt auf.
Zwischen thermoplastischen Fluorkunststoffen und PTFE, so insbesondere zwischen Perfluoräthylen-Propylen (FEP) und Perfluoralkyl-
Perfluorvinyläther (Perfluoralkoxy) (PFA und TFA) einerseits und

- 5 -

PTFE andererseits tritt im geschmolzen Zustand eine Benetzung des PTFE auf. Auch diese Benetzung, die zu einer außerordentlich festen Verbindung der beiden Oberflächen führt, ist bereits bekannt. Die Fluorthermoplaste FEP und PFA werden als Schweißhilfsmittel zur Verbindung zwischen zwei an sich nicht thermoplastisch verschmelzenden PTFE-Teilen benutzt. Diese Schweißverfahren wurden für FEP durch DE-PS 95 29 97, für PFA durch DE-AS 23 11 096, DE-OS 24 36 424 und DE-OS 25 21 734 bereits veröffentlicht.

Es hat sich nun herausgestellt, daß die Benetzung zwischen an sich nicht echt thermoplastisch schmelzbaren PTFE-Partikeln und PFA bei geschmolzenem PFA, dessen Temperatur über dem Schmelzpunkt (Gelpunkt) des PTFE von 327 $^{o}$C liegt, außerordentlich gut ist. Die beiden in der chemischen Struktur und im spezifischen Gewicht ähnlichen Fluorkunststoffe ($\gamma$ PTFE = 2,17, $\gamma$ PFA = 2,14) verbinden sich so stabil, daß man nicht mehr von einer Suspension oder Dispersion sondern von einem homogen Mischwerkstoff sprechen kann. In diesem Mischwerkstoff aus zwei chemisch verwandten Fluorthermoplasten sind die PTFE-Partikel nicht mehr suspendiert, sondern echt eingeschmolzen, wobei eine große Oberfläche der PTFE-Beimischung, d.h. geringe Korngröße, von Vorteil ist. Durch das Zusammenschmelzen von mit PTFE chemisch verwandten thermoplastisch verarbeitbaren Fluorkunststoffen mit nicht thermoplastisch verarbeitbarem PTFE entsteht praktisch eine Fluorkunststofflegierung mit einer Reihe überraschender neuer Produkteigenschaften.

Zum Beispiel: gute Druckstandfestigkeit vor allem bei höheren Temperaturen und ein neues Zug-Dehnungs-Verhalten. Der entstandene Mischwerkstoff, der auch nicht, wie die im geschilderten Stand der Technik erwähnten Zusammensetzungen, zur Entmischung neigt, läßt sich wie ein homogener Thermoplast durch thermische Verfahren wie Extrudieren, Spritzgießen, Transfer-Moulding u.a. verarbeiten.

Durch die Beimischung von gemahlenem PTFE in pulverförmiger Form zum PFA wird ein Mischwerkstoff mit neuen physikalischen und chemischen Eigenschaften erzielt, der durch den hohen Herstellungspreis des PFA und den niedrigen Marktpreis von PTFE-Regenerat noch dazu wirtschaftliche Vorteile bringt. Beispielsweise ist grundsätzlich die Herstellung von Massenteilen im Spritzgußverfahren preiswerter, als wenn sie einzeln gepreßt oder aus gegossenen Rohlingen durch spanende Verarbeitung hergestellt werden.

Das Verfahren der Beimischung von PTFE-Pulver kann auch für das in der Struktur verwandte Copolymerisat FEP benutzt werden, wobei ebenfalls eine sehr gute Oberflächenbindung zwischen PTFE-Partikeln und FEP-Thermoplasten auftritt. Da jedoch die Zustandeigenschaften von FEP sich schon stärker von denen des PTFE unterscheiden, ist die Verbindung zwischen diesen beiden Komponenten des Mischwerkstoffes nicht ganz so stabil, wie sie sich bei der Kombination PFA-PTFE erzielen läßt.

Bei der Verwendung von reinem PFA (oder TFA) zur Spritzgußherstellung von Lagerelementen ergibt sich bei der Verwendung dieser Elemente die Schwierigkeit, daß häufig die Dauer-Druckstandfestigkeit nicht ausreichend ist. Eine Zumischung von Füllstoffen zum PFA z.B. von Kohle- oder Glasfasern, um die Druckstandfestigkeit zu erhöhen, verschlechtert den Reibungsbeiwert des
Materials, der bei reinem PFA bereits ungünstiger als bei PTFE
liegt.

Durch die Zumischung von PTFE-Compounds, beispielsweise mit einner Füllung von Kohle, Graphit, Molybdändisulphid oder ähnlichen bekannten Beimengungen mit günstigen Trockenschmiereigenschaften sowie ihren Mischungen, kann sowohl die Druckstandfestigkeit des PFA-PTFE-Mischwerkstoffes als auch sein Reibungsbeiwert erheblich verbessert werden. Soll nur die Druckstandfestigkeit des PFA erhöht werden, so empfiehlt sich eine Beimischung von
PTFE-Compounds mit einer Füllung von Glas in Form von Fasern oder
Kugeln, von Metallpartikeln oder Mineralsubstanzen. Solche PTFE-
Compounds sind nach dem Stand der Technik bekannt.

Es ist noch zu erwähnen, daß PTFE-Compound-Abfälle beim heutigen
Stand der Technik kaum als Regenerat verwendet werden, da deren
Sintereigenschaften sehr schlecht sind, die Wiederverarbeitung
zu Produkten mit ungünstigen Eigenschaften führt und dadurch ein
Markt für diese Abfälle praktisch nicht vorhanden ist. Die Pulver
aus PTFE-Compound-Abfällen sind deshalb praktisch zum Preis des Mahlprozesses herzustellen.

Der nach der Erfindung erzeugte homogene Mischwerkstoff aus einem Fluorthermoplasten und PTFE kann je nach Bedürfnissen des Anwendungszweckes eingestellt werden und läßt sich trotzdem einwandfrei thermoplstisch verarbeiten, er ähnelt einer homogenen Legierung.

Durch Versuche wurde gefunden, daß eine Beimischung von bis zu 70 Gewichtsprozent PTFE oder PTFE-Compound zum PFA möglich ist, daß jedoch vorzugsweise ein Beimischungsanteil zwischen 15 und 40 % PTFE benutzt wird. Die Körnung des aufgemahlenen PTFE ist vorteilhafterweise möglichst fein, aus zerkleinerungstechnischwirtschaftlichen Gründen läßt sich PTFE nicht beliebig fein aufmahlen. Wie sich durch Versuche ergeben hat, sollte die Körnung des PTFE-Pulvers möglichst vollständig unter 0,1 mm Korndurchmesser liegen, wobei ein großer Anteil des Körnungsbandes unter 0,05 mm liegt. Dieses PTFE-Pulver wird, um Entmischungen zu vermeiden, am besten direkt dem in der Regel als Granulat vorliegendem PFA oder FEP unmittelbar vor der Aufschmelzung, die großtechnisch meist kontinuierlich vorgenommen wird, dosiert zugesetzt. Bei der gemeinsamen Aufschmelzung der beiden Komponenten ergibt sich die außerordentlich gute Benetzung zwischen den Fluorthermoplasten und PTFE, sodaß beispielsweise am Ende der Plastifizierung in einem Extruder oder einer Spritzgießmaschine ein nahezu homogener Mischwerkstoff entstanden ist, der die genannten neuen Vorteile und Eigenschaften besitzt.

Wie schon erwähnt, ist es auch schon versucht worden und bekannt, zum PFA (oder TFA) Füllstoffe in der Form von Glasfasern, Kohle, Graphit oder anderen Füllstoffen beizumischen, wobei jedoch diese Beimischung einen besonderen Verfahrensschritt erfordert. Das PFA muß mit den Füllstoffen zusammen aufgeschmolzen und dann granuliert werden, weil sich bei einer unmittelbaren Einmischung vor dem Schmelzprozeß infolge der schlechten Benetzungsfähigkeit zwischen den beiden Komponenten keine homogene Mischung bildet. Wird der Füllstoff gemäß der Erfindung jedoch mit dem gemahlenen PTFE eingetragen, so ergibt sich eine einwandfreie nicht zum Entmischen neigende Verbindung, da sich PTFE und die thermoplastische Fluorkunststoffsubstanz sehr gut gegenseitig benetzen.

Es ist demnach festzustellen, daß die Erfindung die eingangs gestellte Aufgabe löst, nämlich einen thermoplastischen Fluorkunststoff-Mischwerkstoff mit neuen Eigenschaften zu schaffen, der homogen verteiltes PTFE enthält, nicht zur Entmischung neigt und sich wirtschaftlich vorteilhaft herstellen läßt.

**PAMPUS** &
Am Nordkanal · Postfach 80
4156 Willich 3 - Schiefbahn

P A T E N T A N S P R Ü C H E

1. Mischwerkstoff bestehend aus einem thermoplastisch verarbeitbarem Fluorthermoplasten mit Zusatz von Füllstoffen dadurch gekennzeichnet, daß dem thermoplastisch verarbeitbaren Fluorkunststoff
feinkörniges Polytetrafluoräthylen (PTFE) in reiner oder mit Zusätzen gefüllter Form (Compounds) zugesetzt worden ist und beide Komponenten so homogen verschmolzen sind, daß ein thermoplastisch weiterverarbeitbarer Mischwerkstoff entstanden ist.

2. Fluorthermoplastgemisch nach Anspruch (1) dadurch gekennzeichnet,
daß als Füllstoff gemahlenes, bereits gesintertes PTFE (Regenerat) in reiner, ungefüllter Form zugesetzt worden ist.

3. Fluorthermoplastgemisch nach Anspruch (1) dadurch gekennzeichnet,
daß als Füllstoff PTFE-Regenerat mit einer Füllung von Kohle,
Graphit, Molybdändisulphid und ähnlichen bekannten, die Trocken-
Schmierung verbessernden Zusätzen, sowie Gemischen davon, zugesetzt worden ist.

4. Fluorthermoplastgemisch nach Anspruch (1) dadurch gekennzeichnet,
daß als Füllstoff PTFE-Regenerat-Pulver mit einer Füllung von
Glas in Form von Fasern oder Kugeln zugesetzt worden ist.

5. Fluorthermoplastgemisch nach Anspruch (1) dadurch gekennzeichnet, daß als Füllstoff PTFE-Regenerat-Pulver mit einer Füllung von Mineralstoffen oder Metallpartikeln zugesetzt worden ist.

6. Verfahren zur Herstellung eines Mischwerkstoffes bestehend aus einem Fluorthermoplast der Perfluoralkoxy-Gruppe (PFA oder TFA) oder Perfluoräthylen-Propylen (FEP) und einem Zusatz von Füllstoffen dadurch gekennzeichnet, daß dem PFA- oder FEP-Thermoplasten vor oder während der Aufschmelzung pulver- oder granulatförmiges Polytetrafluoräthylen (PTFE) aus gemahlenem reinem PTFE oder PTFE-Compounds (Regenerat) oder einer Mischung dieser beiden Stoffe zugesetzt werden und, daß beide Komponenten gemeinsam aufgeschmolzen werden.

| | Europäisches Patentamt | **EUROPÄISCHER RECHERCHENBERICHT** | 0026806 ~~Nummer der Anmeldung~~ |
| | | | EP 80102207.0 |

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | | betrifft Anspruch | |
| A | DE - A1 - 2 502 517 (YARDNEY) + Gesamt + -- | | 1-6 | C 08 L 27/12 C 08 L 27/18 C 08 J 3/20 |
| A | DE - B - 1 115 449 (THE POLYMER CORPORATION) + Gesamt + ---- | | 1-6 | |
| | | | | **RECHERCHIERTE SACHGEBIETE (Int. Cl.³)** |
| | | | | C 08 L C 08 J C 08 F |

| X | Der vorliegende Recherchenbericht wurde für alle Patentansprüche erstellt. |
|---|---|

| Recherchenort | Abschlußdatum der Recherche | Prüfer |
|---|---|---|
| WIEN | 19-12-1980 | DICHER |

EPA form 1503.1 06.78